Europäisches Patentamt

European Patent Office

Office européen des brevets

(11) Veröffentlichungsnummer: **0 207 071**
**A1**

## (12) EUROPÄISCHE PATENTANMELDUNG

(21) Anmeldenummer: 86890188.5

(22) Anmeldetag: 24.06.86

(51) Int. Cl.4: **B27L 11/00 , B26F 1/44**

(30) Priorität: 27.06.85 AT 1920/85

(43) Veröffentlichungstag der Anmeldung:
**30.12.86 Patentblatt 86/52**

(84) Benannte Vertragsstaaten:
**BE DE FR IT**

(71) Anmelder: VEREINIGTE EDELSTAHLWERKE
AKTIENGESELLSCHAFT (VEW)
Elisabethstrasse 12
A-1010 Wien(AT)

(72) Erfinder: **Eichler, Norbert**
**Leopold Weber Strasse 7**
**A-3333 Böhlerwerk(AT)**

(74) Vertreter: **Jellinek, Gerhard, Dr.**
**Vereinigte Edelstahlwerke AG (VEW)**
**Elisabethstrasse 12**
**A-1010 Wien(AT)**

(54) Maschinenmesser und Verfahren zur Herstellung desselben.

(57) Die Erfindung betrifft ein Maschinenmesser sowie ein Verfahren zur Herstellung eines Maschinenmessers, insbesondere zum Schneiden, Schälen od. dgl. von Holz, Papier od. dgl. mit einem Messerkörper (1), welcher einen Schneidenteil (3), insbesondere mit Schnellstahl aufweist, der mit dem Messerkörper (1) mittel-bzw. unmittelbar metallisch verbunden ist, mit einem Befestigungsbereich (5), welcher zur Aufnahme in einer Maschine dient, und gegebenenfalls Ausnehmungen, Bohrungen (7) od. dgl. aufweist, wobei der Messerkörper (1) aus zumindest drei mittel-bzw. unmittelbar metallisch verbundenen Teilen besteht, wobei der Schneidenteil (3) mit einem Trägerkörper (2) metallisch verbunden, insbesondere direkt, z.B. durch Warmwalzen, Schmieden od. dgl. verbunden ist, und der Trägerkörper weiters mit zumindest einem Befestigungsbereichsteil (5) verschweißt ist.

Fig. 2

## Maschinenmesser und Verfahren zur Herstellung desselben

Die Erfindung betrifft ein Maschinenmesser, insbesondere zum Schneiden und Schälen von Holz, Papier od. dgl., sowie ein Verfahren zur Herstellung desselben.

Maschinenmesser, welche zur Bearbeitung von Holz, Papier, Pappe und dgl. dienen, also Substanzen, die sowohl einen fasrigen organischen Anteil aufweisen, als auch anorganische Stoffe, z.B. Füllstoffe wie Titanoxid, mineralische Einlagerungen und dgl., unterliegen gerade, wenn sie bei Hochleistungsmaschinen eingesetzt werden, einer extremen Beanspruchung. Dieser extremen Beanspruchung und zwar sowohl des Messerkörpers als auch der Schneide kann besonders günstig dadurch Rechnung getragen werden, daß der Messerkörper aus einem anderen Werkstoff aufgebaut ist, als die Schneide selbst. So ist es beispielsweise bekannt, die Messerschneide aus Schnellstahl auszubilden, also einem Stahl, welcher einen hohen Anteil an relativ seltenen Legierungselementen, z.B. Wolfram, aufweist, welcher ursprünglich zur Bearbeitung von Stahl und dgl. entwickelt wurde. Bei derartigen Maschinenmessern ist es nun erforderlich, daß diese Maschinenmesser, nachdem eine Plattierung bzw. eine teilweise Plattierung des Messerkörpers durchgeführt wurde, welche beispielsweise durch Walzen, Schmieden, Auftragsschweißen od. dgl. durchgeführt werden kann, einer Wärmebehandlung zugeführt werden. Diese Wärmebehandlung, die dazu dient, die Härte des Messers einzustellen, führt zu Gestaltveränderungen, die im allgemeinen als Verziehen bekannt sind. Da nun gerade beim Schälen von Holz, z.B. von Furnieren, oder beim Schneiden von Papier, eine hohe Anforderung an die Genauigkeit gestellt wird, muß eine derartige Richtarbeit extrem genau durchgeführt werden, um das erwünschte Ergebnis zu erhalten.

Die vorliegende Erfindung hat sich zum Ziel gesetzt, ein Maschinenmesser sowie ein Verfahren zur Herstellung desselben zu schaffen, das bei einem geringsten Materialaufwand die erforderlichen Standzeiten aufweist, welches im Laufe seines Herstellungsverfahrens nur geringer Richtarbeit unterworfen werden muß. Weiters soll der Gesamtenergieaufwand für das Härten und Anlassen so gering wie möglich sein.

Das erfindungsgemäße Maschinenmesser zum Schneiden, Schälen od. dgl. von Holz, Papier od. dgl. mit einem Messerkörper, welcher einen Schneidenteil, insbesondere mit Schnellstahl aufweist, der mit dem Messerkörper mittel-bzw. unmittelbar metallisch verbunden ist, mit einem Befestigungsbereichsteil, welcher zur Aufnahme in einer Maschine dient, und gegebenenfalls Ausnehmungen, Bohrungen od. dgl. aufweist, besteht im wesentlichen darin, daß der Messerkörper aus zumindest drei mittel-bzw. unmittelbar metallisch verbundenen Teilen besteht, wobei der Schneidenteil mit einem Trägerkörper metallisch verbunden ist, insbesondere direkt z.B. durch Warmwalzen, Schmieden od. dgl. verbunden ist und der Trägerkörper weiters mit zumindest einem Befestigungsbereichsteil verschweißt ist. Ein derartiges Maschinenmesser weist gegenüber den herkömmlichen den Vorteil auf, daß es mit geringerer Richtarbeit und damit genauer und mit geringerem Aufwand hergestellt werden kann, wobei eine höhere Kombination von Materialien erreicht werden kann, da die Materialien entsprechend ihren Anforderungen auswählbar und kombinierbar sind.

Gemäß einem weiteren Merkmal der vorliegenden Erfindung ist der Trägerkörper mit rostarmem bzw. rostfreiem Stahl aufgebaut bzw. besteht insbesondere daraus, wodurch beispielsweise bei einem Furnierschneide-oder Schälmesser oder einem sonstigen Messer, auch die geringste Verfärbung des Schneidgutes, z.B. durch Abrasion des Trägerkörpers auf dem Schneidegut verhindert werden soll, bzw. eine nachträgliche Oxidation dieser Metallpartikelchen verhindert werden kann. Ein derartiges Messer erfüllt selbst höchste Anforderungen bei besonders sparsamer Materialwirtschaft, sodaß ein breiter Einsatzbereich gewährleistet ist.

Gemäß einem weiteren Merkmal der vorliegenden Erfindung ist der Befestigungsbereichsteil mit Baustahl, insbesondere aus Baustahl aufgebaut, wobei eine besonders hohe mechanische Festigkeit gewährleistet ist, welche gleichzeitig aufgrund der Materialbeschaffenheit einen besonders weiten Anwendungsbereich gestattet.

Das erfindungsgemäße Verfahren zur Herstellung eines Maschinenmessers, wobei ein Messerkörper, welcher einen Befestigungsbereich aufweist, mit einem Schneidenteil mittel-bzw. unmittelbar metallisch verbunden wird, insbesondere durch Walzen, Schmieden, Schweißen od. dgl. verbunden wird, worauf das Maschinenmesser gehärtet, angelassen und gerichtet, sowie gegebenenfalls mechanisch, z.B. spanabhebend, bearbeitet wird, besteht im wesentlichen darin, daß der Schneidenteil mit einem Trägerkörper mittel-bzw. unmittelbar metallisch verbunden wird, und diese gemeinsam mit zumindest einem Befestigungsbereichsteil, vorzugsweise nachdem der Schneidenteil gemeinsam mit dem Trägerkörper wärmebehandelt wurde, verschweißt werden. Mit einem derartigen Verfahren ist ein besonders einfacher Arbeitslauf gewährleistet, wobei der Wärmeaufwand für die Härte-und Anlaßarbeit, sowie die Richtarbeit besonders gering gehalten werden kann. Weiters kann nach einem derartigen Verfahren ein besonders exakt arbeitendes Messer, welches hohe Standzeiten und zwar sowohl im Schneidenbereich als auch im Maschinenbefestigungsbereich aufweist, erhalten werden.

Ein besonders geringer Aufwand für die Richtarbeit kann dann erreicht werden, wenn der Schneidenteil gemeinsam mit dem Trägerkörper nach der Wärmebehandlung, jedoch vor dem Verscheißen mit dem Befestigungsbereichsteil gerichtet wird.

Im folgenden wird die Erfindung anhand des Beispieles und der Zeichnungen näher erläutert.

Es zeigen Fig. 1 ein Maschinenmesser mit mehreren Befestigungsteilbereichen, Fig. 2 ein Furnierschneidemesser und Fig. 3 ein Querschneidemesser für Papier.

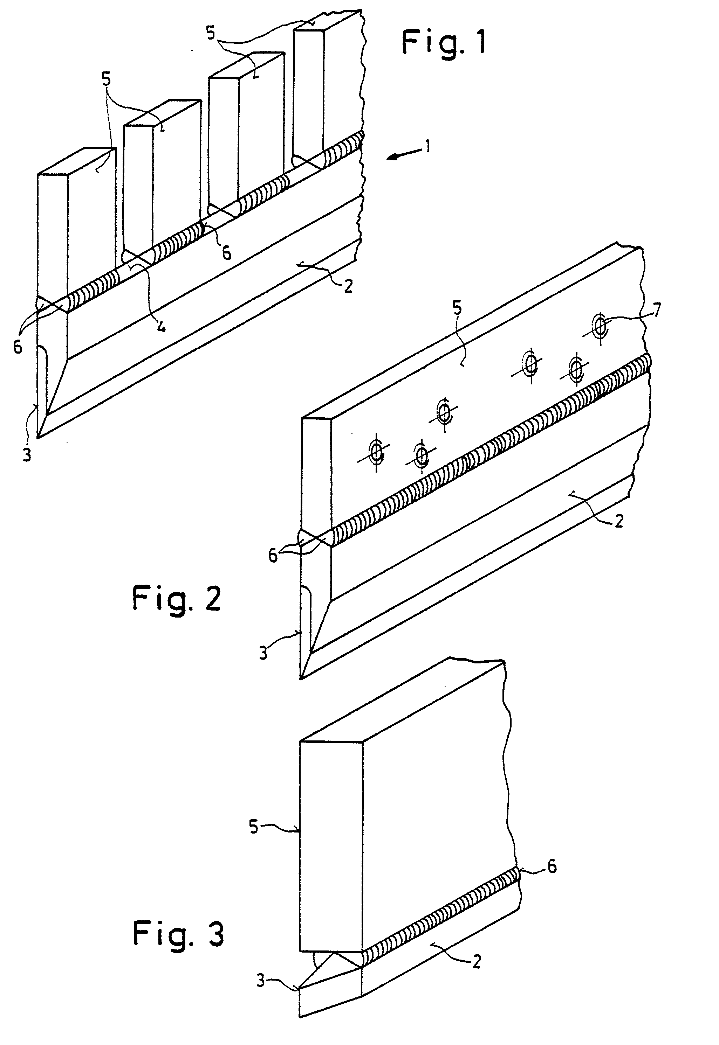

Das in Fig. 1 dargestellte Messer weist einen Messerkörper 1 auf, welcher aus zumindest drei Teilen aufgebaut ist. Ein Trägerkörper 2, z.B. aus St 42, weist einen Schneidenteil aus Warmarbeitsstahl auf. Dieser Schneidenteil 3 ist durch Auftragsschweißen in einer entsprechenden Ausnehmung des Trägerkörpers aufgebracht worden. Der Trägerkörper ist an seiner der Schneide abgewandten Fläche 4 mit Befestigungsbereichsteilen 5 über Schweißnähte 6 verbunden. Diese Schweißnähte 6 wurden von beiden Seiten des Messers angebracht. Diese Befestigungsbereichsteile 5 können ebenfalls aus St 42 bestehen.

Das in Fig. 2 dargestellte Messer weist ebenfalls einen Trägerkörper 2 auf, auf welchem durch Walzen ein Schnellstahl, welcher als Schneidenteil 3 dient, metallisch verbunden aufgebracht wurde. Der Trägerkörper 2 ist über Schweißnähte 6 mit einem Befestigungsbereichsteil 5 verbunden. Dieser Teil 5 weist Bohrungen 7 auf, welche zur Befestigung an der Maschine dienen.

Bei dem in Fig. 3 dargstellten Querschneidemesser für Papier ist der Schneidenteil 3 am Trägerkör per angeschweißt. Der Schneidenkörper 3 weist in Schnittrichtung vor den Befestigungsbereichsteil 5 und ist im wesentlichen prismatisch aufgebaut. Bei einem herkömmlich ausgeführten Querschneidemesser müßten die Teile 3 und 2 einteilig ausgebildet sein, und mit dem Trägerkörper verschweißt sein.

Ein Furnierschneidmesser gemäß Fig. 2 mit den Abmessungen 200 x 19 x 1400 mm wurde wie folgt gefertigt. Ein Trägerkörper aus in Gew.-% C 0,11, Cr 13,0, Rest Eisen und erschmelzungsbedingte Verunreinigungen wurde durch Warmwalzen bei 1130 ° C mit einer Auflage aus in Gew.-% C 0,53, Cr 8,3, Mo 1,2, W 1,2, Rest Eisen und erschmelzungsbedingte Verunreinigungen metallisch verbunden. Der Rückenbereich, welcher zur Verbindung mit dem Befestigungsbereichsteil dient, hat durch das Walzen einen sphärischen Querschnitt, sodaß zum Verschweißen keine zusätzliche mechanische Bearbeitung für die Schweißfuge erforderlich ist. Dieser Verbundteil wird bei 780 bis 800 ° C geglüht, sodann gerichtet,abgelängt und auf 1040 ° C erwärmt und sodann in Öl abgeschreckt und bei 200 ° C auf 59 HRC angelassen. Der so erhaltene Schneidenteil mit Trägerkörper wurde mit dem Befestigungsbereichsteil aus St 42, einem unlegierten Baustahl mit 0,20 Gew.-% Kohlenstoff durch Verscheißen unter Schutzgas mit einer Elektrode in Gew.-% C 0,09, Si 0,9, Mn 1,5, Rest Eisen und erschmelzungsbedingte Verunreinigungen verbunden. Der so erhaltene Körper wurde nicht nachgerichtet, mechanisch spanabhebend bearbeitet und die Schneide geschliffen. Durch die Werkzeugauswahl bei dem Trägerkörper und zwar einem rostfreien Stahl kann ein Abfärben des Messers auf das Schneidgut vollauf vermieden werden.

## Ansprüche

1. Maschinenmesser, insbesondere zum Schneiden, Schälen od. dgl. von Holz, Papier od. dgl. mit einem Messerkörper, welcher einen Schneidenteil (3), insbesondere mit Schnellstahl aufweist, der mit dem Messerkörper (1) mittel-bzw. unmittelbar metallisch verbunden ist, mit einem Befestigungsbereich (5), welcher zur Aufnahme in einer Maschine dient, und gegebenenfalls Ausnehmungen, Bohrungen (7) od. dg. aufweist, dadurch gekennzeichnet, daß der Messerkörper (1) aus zumindest drei mittel-bzw. unmittelbar metallisch verbunden Teilen besteht, wobei der Schneidenteil - (3) mit einem Trägerkörper (2) metallisch verbunden, insbesondere direkt, z.B. durch Warmwalzen, Schmieden od. dgl. verbunden ist, und der Trägerkörper weiters mit zumindest einem Befestigungsbereichsteil (5) verschweißt ist.

2. Maschinenmesser nach Anspruch 1, dadurch gekennzeichnet, daß der Trägerkörper (2) mit rostarmem bzw. rostfreiem Stahl aufgebaut ist, insbesondere daraus besteht.

3. Maschinenmesser nach Anspruch 1 oder 2, dadurch gekennzeichnet, daß der Befestigungsbereichsteil (5) mit Baustahl, insbesondere aus Baustahl aufgebaut ist.

4. Verfahren zur Herstellung eines Maschinenmessers, insbesondere nach einem der Ansprüche 1 bis 3, wobei ein Messerkörper, welcher einen Befestigungsbereich aufweist, mit einem Schneidenteil mittel-bzw. unmittelbar metallisch verbunden, insbesondere durch Walzen, Schmieden, Schweißen od. dgl. verbunden ist, worauf das Maschinenmesser g ehärtet, angelassen und gerichtet sowie gegebenenfalls mechanisch, z.B.

spanabhebend, bearbeitet wird, dadurch gekennzeichnet, daß der Schneidenteil, welcher mit einem Trägerkörper mittel-bzw. unmittelbar metallisch verbunden wird, mit diesem gemeinsam, vorzugsweise nachdem der Schneidenteil gemeinsam mit dem Trägerkörper wärmebehandelt wurde, mit zumindest einem Befestigungsbereichsteil verschweißt wird.

5. Verfahren nach Anspruch 4, dadurch gekennzeichnet, daß der Schneidenteil gemeinsam mit dem Trägerkörper nach der Wärmebehandlung, jedoch vor dem Verschweißen mit dem Befestigungsbereichsteil gerichtet wird.

Fig. 1

Fig. 2

Fig. 3

|  | Europäisches Patentamt | **EUROPÄISCHER RECHERCHENBERICHT** | Nummer der Anmeidung |

| | **EINSCHLÄGIGE DOKUMENTE** | | EP 86890188.5 |

| Kategorie | Kennzeichnung des Dokuments mit Angabe, soweit erforderlich, der maßgeblicnen Teile | Betrifft Anspruch | KLASSIFIKATION DER ANMELDUNG (Int C: 4) |
|---|---|---|---|
| A | FR - A - 2 337 017 (GOMMANN) <br> * Gesamt * <br> —-- | 1 | B 27 L 11/00 <br> B 26 F 1/44 |
| A | EP - A1 - 0 099 004 (KUSNACHT AG) <br> * Gesamt * <br> -- | 1 | |
| A | DE - B2 - 2 740 981 (VEW) <br> * Gesamt * <br> ---- | 1 | |

RECHERCHIERTE SACHGEBIETE (Int. Cl.4)

B 27 L

B 27 C

B 27 G

B 26 F

B 31 B

Der vorliegende Recherchenbericht wurde für alle Patentansprüche erstellt.

| Recherchenort | Abschlußdatum der Recherche | Prüfer |
|---|---|---|
| WIEN | 27-09-1986 | TRATTNER |